# EUROPEAN PATENT SPECIFICATION

(11) **EP 4 058 422 B1**
(45) Date of publication and mention of the grant of the patent: **27.03.2024**
(21) Application number: 20801133.8
(22) Date of filing: 13.11.2020
(51) Int. Cl.: C05C 3/00, C05C 9/00, C05D 3/00, C05D 9/02, C05G 3/90, C05G 5/12

(54) **UREA-BASED BLEND COMPOSITION AND METHOD FOR THE MANUFACTURE THEREOF**
HARNSTOFFBASIERTE MISCHUNGSZUSAMMENSETZUNG UND VERFAHREN ZUR HERSTELLUNG DAVON
COMPOSITION DE MÉLANGE À BASE D'URÉE ET SON PROCÉDÉ DE FABRICATION

(30) Priority: 15.11.2019 EP 19209469
(43) Date of publication of application: 21.09.2022
(73) Proprietor: Yara International ASA, 0277 Oslo (NO)
(72) Inventor: COLPAERT, Filip, 9052 Zwijnaarde (BE); DONKERS, Ellen, 4533 HS Terneuzen (NL); VAN BELZEN, Ruud, 4541 HJ Sluiskil Terneuzen (NL); VAN DE WALLE, Tom, 9180 Moerbeke-Waas (BE); VAN ELSLANDE, Paul, 4541 HJ Sluiskil Terneuzen (NL)
(74) Representative: De Clercq & Partners
(86) International application number: PCT/EP2020/082019
(87) International publication number: WO 2021/094512

(56) References cited:
- EP-A1- 3 567 019
- WO-A1-2017/081183
- WO-A1-2017/100507
- WO-A1-2017/168288
- WO-A1-2018/134765
- Ammonium Z ET AL: "Status: Revised SAFETY DATA SHEET SECTION 1 PRODUCT AND COMPANY IDENTIFICATION Chemical Family: Ammonium Phosphates?Inorganic Salts Synonyms: Monoammonium Phosphate + Sulfur and Zinc Monobasic Ammonium Phosphate + Sulfur and Zinc Ammonium Dihydrogen Phosphate + Sulfur and Zinc MAP 8 AM to 5 PM", , 6 January 2015 (2015-01-06), pages 1-8, XP055842198, Retrieved from the Internet: URL:https://assets.ctfassets.net/3jf1t80tl ft4/1XROSLwTPjVICcN64k9JBk/655d3c8a3e6235a 6384ac06d04e6fde8/SDS_MESZ.pdf [retrieved on 2021-09-17]

## Description

### Field of the invention

This invention relates to a solid, particulate, urea-based blend composition comprising a urea-based compound in particulate form, a component comprising an ammonium source in particulate form, a urease inhibitor of the type phosphoric triamide, in particular N-(n-butyl) thiophosphoric triamide (nBTPT), and a cation source with improved properties for reducing ammonia loss during storage and by urease activity in the soil. The invention further relates to a method for the manufacture of a solid, particulate urea-based blend composition comprising a urea-based compound in particulate form, a component comprising an ammonium source in particulate form, and a urease inhibitor of the type phosphoric triamide, in particular N-(n-butyl) thiophosphoric triamide (nBTPT) and a cation source. The product is in particular suitable as a fertilizer.

### Background of the invention

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is a basic element for any living system as a constituent of protein.

Urea is often used as such, but also as a component of a particulate blend, i.e. a physical blend or bulk blend, containing additional (primary, secondary or micro- nutrient) elements, such as potassium, phosphor, nitrogen and sulphur to obtain a particulate NPK(S), NP(S) or NK(S) blend, and other elements such as magnesium and calcium (secondary nutrients). In that respect, urea can easily be blended with, for example, potassium sulphate (sulphate of potash, SOP) and potassium magnesium sulphate (sulphate of potash magnesia). Urea can also be blended with sodium nitrate (Chilean nitrate 16-0-0), ammonium sulphate (sulphate of ammonia), urea ammonium sulphate (UAS), mono ammonium phosphate (MAP), di-ammonium phosphate (DAP), rock phosphate, potassium chloride (muriate of potash, MOP) and urea calcium nitrate (UCAN).

Particulate urea can hardly be mixed and stored as a blend with certain chemicals due to hygroscopic double salt formation or release of crystal water but can be mixed, and co-applied shortly after, with calcium nitrate, ammonium nitrate, calcium ammonium nitrate or limestone ammonium nitrate, ammonium sulphate nitrate, potassium ammonium nitrate (nitropotash), superphosphate, and triple superphosphate. A more detailed list can be found in "Guidance for the compatibility of fertilizer blending materials" by EFMA, Brussels, Belgium, June 2006.

Furthermore, urea particles can be "doped" or coated with elemental sulphur to supply sulphur, or indirectly sulphates, to the soil, in particular in sulphur-deficient soils.

Unfortunately, urea nitrogen cannot be assimilated directly by the plants and needs to be converted through hydrolysis into ammonium and nitrification into nitrate. Urea is first hydrolysed in the soil under the action of an enzyme, commonly called urease, to produce ammonia and carbon dioxide. Ureases are found in numerous bacteria, fungi, algae, plants and some invertebrates, as well as in soils, as a soil enzyme. Urea hydrolysis tends to increase the pH of its environment as the ammonia is dissolved into the water in the soil, and part of the ammonia can also be released into the atmosphere, a process called ammonia volatilization, thus becoming unavailable for the plant. About 50 weight% of nitrogen can sometimes be lost as a result of the volatilization of ammonia, all depending on the soil type, water content, pH, climate conditions, etc.

The availability of nitrogen, originating from urea, to the root system of plants can be improved by combining a urea-containing fertilizer (i.e. by incorporation or addition) with a urease inhibitor. Urease inhibitors are compounds that are capable of temporarily reducing the activity of the enzyme and slow down the rate at which urea is hydrolysed, avoiding peaks of ammonia concentration and therefore limiting the losses to the air. There are many compounds that can inhibit urease, but only a few that are non-toxic, effective at low concentrations, chemically stable enough and able to be combined with urea-containing fertilizers.

Among the most effective urease inhibitors known today are the phosphoric triamide compounds, first disclosed in US 4,530,714 (Allied Corporation, 1985).

An example of an effective urease inhibitor, disclosed in this patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-containing fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.
However, it has now been shown, as for example in WO2017081183 (Yara, 2017) and WO2017168288 (BASF, 2017), that urease inhibitors of the type phosphoric triamide, especially when applied as a liquid, which is the most common commercially available form, are not stable when in contact with other fertilizer sources such as ammonium sulphate or phosphate-containing fertilizers. Moreover, even a urease inhibitor of the type phosphoric triamide in an alkaline organic solvent, such as a mixture of propylene glycol and N-methylpyrrolidine, stabilised to allow for long storage time of the solution, is rapidly degraded once applied on a urea ammonium sulphate-based composition. Furthermore, the urease inhibitor of the type phosphoric triamide, also applied as a solid, is not stable when in contact with a urea ammonium sulphate-based composition.

EP 3567019A1 (Yara International, 2019) discloses a physical blend composition comprising urea, di-ammonium phosphate, nBTPT, and an alkaline or alkaline-forming compound. WO2017100507A1 (Koch, 2017) discloses blend compositions comprising urea particles coated with a urease inhibitor, and an acidic component, such as ammonium phosphate. The urea particles or the acidic component are coated with a basic compound, such as magnesium oxide, and calcium stearate. WO2018134765A1 (Koch, 2018) discloses urea particles coated with a composition comprising NBPT and a composition obtained by mixing NBPT with dimethylolurea, urea and formaldehyde. The coated urea particles are blended with ammonium phosphate particles, and the mixture is coated with solid magnesium oxide. MicroEssentials SZ is a product commercialized by Mosaic comprising mono-ammonium phosphate, ammonium sulfate, sulfur and a source of zinc.

WO2017042194 discloses a UAS-based composition comprising a urease inhibitor of the type phosphoric triamide and an alkaline or alkaline-forming compound such as calcium oxide (CaO), calcium carbonate (CaCO3), zinc oxide (ZnO) and ethanolamine. The alkaline or alkaline-forming compound increases the stability of the urease inhibitor when both compounds are coated on UAS granules. However, the inventors noted that such compositions release ammonia gas upon prolonged storage. Such a problem would occur for any urea-based blend composition comprising an ammonium source. Ammonium ions are another source of nitrogen for plants with a faster mode of action than urea, which needs to be broken down to ammonium first, so it is common to blend urea particles with ammonium-containing particles to obtain a faster response from the plants to the fertilizing action. However, an ammonia emission is not desirable from a safety point of view, so there is a need to prepare urea-based blend composition comprising a urease inhibitor and a stabilizer which increases the stability of the inhibitor but does not emit ammonia gas.

### Summary of the invention

Surprisingly, the inventors now found that the addition of a cation source comprising a cation selected from the group consisting of Fe²⁺, Fe³⁺, Mn²⁺, and Ni²⁺ increases or at least does not affect negatively the stability of the urease inhibitor of the type phosphoric triamide in the urea-based blend composition, and reduces the ammonia emission of the blend composition during storage.

In one aspect, the invention concerns a solid, particulate, urea-based blend composition comprising a urea-based compound in particulate form, a component comprising an ammonium source in particulate form, 0.0001 to 1.0 weight% of a urease inhibitor of the type phosphoric triamide, 0.0001 to 1.0 weight% of an alkaline or alkaline-forming inorganic or organic compound that is able to interact with the component comprising an ammonium source in particulate form, selected from the group consisting of metal oxides, metal carbamates, metal hydroxides, metal acetates and any mixtures thereof, or from the group of organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, wherein the urea-based blend composition further comprises 0.0001 to 5.0 weight% of a cation source comprising a cation selected from the group consisting of Fe²⁺, Fe³⁺, Mn²⁺, and Ni²⁺ and wherein said cation source is different from the alkaline or alkaline-forming inorganic or organic compound.

In another aspect, the use of the urea-based blend composition according to the present disclosure as a fertilizer is disclosed.

In another aspect, a method for the manufacture of a solid, particulate, urea-based blend composition according to the present disclosure is provided. The method comprises the steps of: 1) providing a urea-based particulate material which is treated with 0.0001 to 1.0 weight% of a urease inhibitor in solid particulate or liquid form, in particular wherein the urease inhibitor is N-(n-butyl) thiophosphoric triamide (nBTPT); 2) providing a particulate material, comprising a component comprising an ammonium source; 3) providing 0.0001 to 1.0 weight% of an alkaline or alkaline-forming inorganic or organic compound that is able to interact with the component comprising an ammonium source in particulate form; 4) providing 0.0001 to 5.0 weight% of a cation source, different from the alkaline or alkaline-forming inorganic or organic compound, comprising a cation selected from the group consisting of Fe²⁺ , Fe³⁺ , Mn²⁺, and Ni²⁺ 5) mixing the components provided in steps 1), 2), 3) and 4); 6) optionally, applying an agent to the particulate compounds, wherein the agent that is able to increase at least the anticaking and/or water-repellence and/or anti-dusting properties of said urea-based blend composition.

Mention is also done to a kit of parts for use with a urea-based blend composition is provided. The kit of parts comprises an alkaline or alkaline-forming inorganic or organic compounds that is able to interact with the component comprising an ammonium source in particulate form; a urease inhibitor of the type phosphoric triamide in solid particulate or liquid form, in particular wherein the urease inhibitor is N-(n-butyl) thiophosphoric triamide (nBTPT); a cation source, different from the alkaline or alkaline-forming inorganic or organic compound, comprising a cation selected from the group consisting of Fe²⁺, Fe³⁺, Mn²⁺, Ni²⁺ and optionally, an anti-caking and/or moisture repellent and/or anti-dusting agent.

With regard to the activity, without being bound by theory, it is hypothesised that the cation source is able to capture the ammonia liberated by the ammonium source created during storage, possibly by the reaction between the alkaline or alkaline-forming compound present in the composition.

### Brief description of the figures

Figure 1 describes the amount of nBTPT recovered after storage of urea-based compositions in bags at room temperature. Figure 1 represents the amount of nBTPT recovered after several weeks of storage of different urea ammonium sulphate-based compositions.
Figure 2 describes the amount of ammonia in vol% in containers containing urea-based compositions. Figure 2 represent the amount of ammonia evaporated upon storage of different urea ammonium sulphate-based compositions.
Figure 3 describes the amount of nBTPT recovered after storage of urea-based compositions in bags at room temperature. Figure 3 represents the amount of nBTPT recovered after several weeks of storage of different urea ammonium sulphate-based compositions.
Figure 4 describes the amount of ammonia in vol% in containers containing urea-based compositions. Figure 4 represent the amount of ammonia evaporated upon storage of different urea ammonium sulphate-based compositions.
Figure 5 represents the amount of nBTPT recovered after several weeks of storage of different physical blend compositions comprising urea particles and ammonium sulphate particles.
Figure 6 represent the amount of ammonia evaporated upon storage of different physical blend compositions comprising urea particles and ammonium sulphate particles.

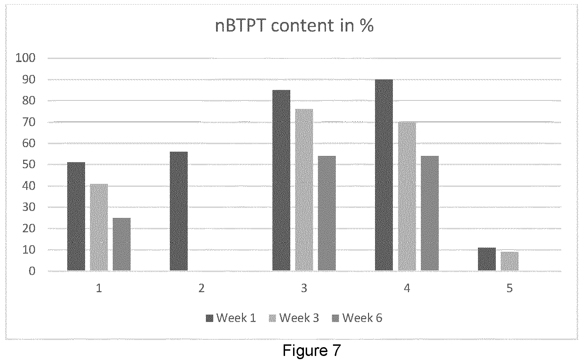

Figure 7 represents the amount of nBTPT recovered after several weeks of storage of different physical blend compositions comprising urea particles and di-ammonium phosphate particles.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compound" refers to one or more than one compound.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the urea-based blend composition.

Within the context of this application, with a particulate form is meant a physical form that can also be designated as granulated, prilled, crystalline, compacted, powdered, and the like, wherein the respective compound is in a small unit form.

Herein after, the alkaline or alkaline-forming inorganic or organic compound that is able to interact with the component comprising an ammonium source in particulate form is called a stabilizer.

The invention concerns a solid, particulate, urea-based blend composition comprising a urea-based compound in particulate form, a component comprising an ammonium source in particulate form, 0.0001 to 1.0 weight% of a urease inhibitor of the type phosphoric triamide, 0.0001 to 1.0 weight% of an alkaline or alkaline-forming inorganic or organic compound that is able to interact with the component comprising an ammonium source in particulate form, selected from the group consisting of metal oxides, metal carbamates, metal hydroxides, metal acetates and any mixtures thereof, or from the group of organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof, wherein the urea-based blend composition further comprises a cation source, different from the alkaline or alkaline-forming inorganic or organic compound, comprising a cation selected from the group consisting of Fe²⁺ , Fe³⁺ , Mn²⁺ , and Ni²⁺ .

From other fields of science, e.g. in water treatment, it is known that some metal complexes, for example those comprising a metal ion selected from the group consisting of Zn²⁺, Fe ²⁺, Fe ³⁺,Cu⁺, Cu²⁺, Ni²⁺, Ag⁺, Pt²⁺, Ru²⁺, Co³⁺ and Cr³⁺, have the ability to exchange ligands with ammonia and form metal ammine complexes. Without being bound by theory, it is thought that ammonia is released in the products described in WO2017042194 by the reaction between the ammonium sulphate and the alkaline or alkaline-forming compound comprised in the compositions. It was envisioned that adding a metal salt or complex that is able to complex ammonia would be able to capture the ammonia released by the fertilizer. Surprisingly, it was observed that other metals, such as Fe²⁺, Fe³⁺, Mn²⁺ were also able to absorb ammonia and form metal ammine complexes.

Further, it was observed that these cation sources improve the stability of the urease inhibitor or at least do not lead to any significantly increased decomposition of the urease inhibitor present in the urea-based blend composition.

### Urease Inhibitor

In one embodiment, this disclosure is concerned with a solid, particulate, urea-based blend composition comprising a urease inhibitor of the type phosphoric triamide, in particular N-(n-butyl) thiophosphoric triamide (nBTPT), wherein the urease inhibitor of the type phosphoric triamide is a compound of formula I: 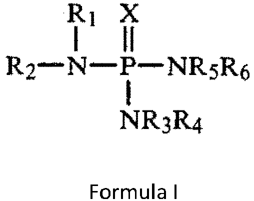 wherein:
X is oxygen or sulphur;
R1 is alkyl, cycloalkenyl, aralkyl, aryl, alkenyl, alkynyl, or cycloalkyl;
R2 is hydrogen, alkyl, cycloalkenyl, aralkyl, aryl, alkenyl, alkynyl, or cyclo-alkyl, or R1 and R2 together may form an alkylene or alkenylene chain which may optionally include one or more heteroatoms of divalent oxygen, nitrogen or sulphur completing a 4, 5, 6, 7, or 8 membered ring system; and
R3, R4, R5 and R6 are individually hydrogen or alkyl having 1 to 6 carbon atoms. In the present specification and claims, the term "phosphoric triamide compounds" is used to refer to the compounds of formula I.

The terms alkyl, cycloalkenyl, aralkyl, aryl, alkenyl, alkynyl, and cycloalkyl as used herein, refer to compounds having from up to 10 carbon atoms, in particular up to 6 carbon atoms. The lowest number of carbon atoms is between 1-3 depending on the structure of the substituent.

In one embodiment, the urease inhibitor is nBTPT. nBTPT is sold as the most effective known urease inhibitor and has the following chemical formula II: 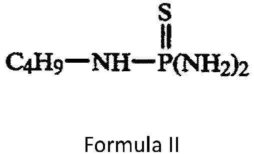 It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

In order to be effective, the urease inhibitor of the type phosphoric triamide, in particular N-(n-butyl) thiophosphoric triamide (nBTPT) is present in the urea-based composition at a level of 0.0001 to 1.0 weight%, in particular 0.02 to 0.2% weight%, more in particular 0.03 to 0.06 weight%, relative to the total weight of the urea-based composition. It was found that an amount of urease inhibitor between 0.0001 to 1.0 weight% is satisfying in the urea-based blend compositions of the present disclosure. In one embodiment, the urease inhibitor is present at a level of around 0.05 weight%.

In one embodiment, the weight ratio of urease inhibitor of the type phosphoric triamide to the alkaline or alkaline-forming inorganic or organic compound in the compositions according to the present disclosure ranges from 1:15 to 5:1, in particular from 1:10 to 2:1, more in particular from 1:5 to 2:1. In order to obtain a good stabilization effect of the urease inhibitor, it is desirable to adapt the amount of stabilizing agent, the alkaline or alkaline-forming inorganic or organic compound, to the amount of urease inhibitor used in the urea-based blend compositions. Too much stabilizer would only increase the manufacturing cost without improving the stabilization of the urease inhibitor, but too little stabilizer would not have the desired stabilizing effect. Examples of suitable inhibitor to stabilizer ratios are 1:1 or 2:1.

In one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In one embodiment, the urease inhibitor is applied onto the urea-based compound in liquid or in particulate form, is melt-mixed with the urea-based compound, or a combination thereof.

In embodiments where the urease inhibitor of the type phosphoric triamide, in particular N-(n-butyl) thiophosphoric triamide (nBTPT), is used as a liquid, it may be used as a 0.1 to 75 weight% solution, in particular as a 15 to 30 weight% solution, relative to the total weight of the solution. Commercial solutions are available, for example as Agrotain^{®} Ultra (Koch, US), N Yield^{™} (Eco Agro, The Netherlands), Rhodia Ag-Rho^{™} N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17,5 weight% of nBTPT. Solid nBTPT may also be used as a 25 weight% solution in diethylene glycol monobutyl ether.

Experiments showed that, in compositions according to the invention, less urease inhibitor of the type phosphoric triamide, in particular N-(n-butyl) thiophosphoric triamide (nBTPT) needs to be used than is commonly employed in the prior art. For example, according to the invention, an amount of around 0.05 weight% is recommended, while for the use of Agrotain^{®} Ultra, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-live thereof. This finding also ensures that less urease inhibitor of the type phosphoric triamide, in particular N-(n-butyl) thiophosphoric triamide (nBTPT) is introduced into the environment.

In embodiments where the urease inhibitor is used in its solid form, it is used as a powder, in particular with a purity of 99 weight% or more. It is available, for example, from Sunfit Chemical Co. (China). In one embodiment, the urease inhibitor is in solid particulate form.
The urease inhibitor of the type phosphoric triamide, in particular N-(n-butyl) thiophosphoric triamide (nBTPT) can be applied to particles by common coating and blending techniques, well known to the skilled person, such as spray-coating and drum-coating.

### Alkaline or alkaline-forming compound:

From WO2017042194, it is known that adding an alkaline or alkaline-forming compound that is able to interact with ammonium sulphate to a UAS-based composition increases the stability of a urease inhibitor of the phosphoric triamide type. A range of inorganic and organic compound may be used in such compositions. As an inorganic compound it may be selected from the group consisting of metal oxides, such as calcium oxide, magnesium oxide, zinc oxide, sodium oxide, aluminium oxide, barium oxide and copper oxide; carbonates, such as calcium carbonate, sodium carbonate, ammonium carbonate, barium carbonate; hydroxides, such as aluminium hydroxide, ammonium hydroxide, sodium hydroxide, potassium hydroxide, calcium hydroxide, magnesium hydroxide, iron hydroxide, barium hydroxide and tetraalkyl /aryl ammonium hydroxides; and acetates, such as sodium acetate, ammonium acetate, magnesium acetate, zinc acetate and barium acetate, and any mixture thereof.

As an organic compound, it may be selected from the group of organic bases consisting of ammonia; amines, such as triethylamine, ethanolamine and triethanolamine; amides, such as sodium amide and magnesium diamide; adenines; amidines; guanidines; anilines; carbamates; thiazoles; triazoles; pyridines; imidazoles; benzimidazoles; histidines; phosphazenes, and any mixture thereof.

The alkaline or alkaline-forming inorganic or organic compound is present in the composition at a level of 0.0001 to 1.0 weight%, in particular 0.01 to 1.0 weight%, more in particular 0.02 to 0.5 weight%, relative to the total weight of the composition. It is desirable to not use a too large amount of the alkaline or alkaline-forming compound. Using too much may modify the manufacturing process if the compound is added during it, or affect the properties of the particles, such as particle strength, flowability, or tendency to absorb water, when it is applied as a coating. Further, it is not economical to add unnecessary material to a commercialized product. So, it may be desirable to limit the amount of cation source to 1.0 weight% compared to the total weight of the urea-based blend composition. In one embodiment, the amount of alkaline or alkaline-forming compound is at most 0.5 weight%.

In one embodiment, the alkaline or alkaline-forming compound is selected from the group consisting of calcium oxide, zinc oxide, magnesium oxide, calcium carbonate, and mixtures thereof. It was found that calcium oxide, zinc oxide, magnesium oxide and calcium carbonate were particularly suitable for use in urea-based blend compositions. They provide good stability of the urease inhibitor, are commercially available on large scale, not toxic to plants and present a low risk to human health. They were also found adapted to be used in manufacturing process, i.e. they do not disturb processes such as concentration/evaporation, granulation and/or drying, and/or as a coating. Advantageously, these metals (Ca, Zn and Mg) may also function as a nutrient element to plants in the soil.

In one embodiment, the alkaline or alkaline-forming compound is applied onto the urea-based blend composition in particulate form, is melt-mixed with one of the particulate components of the urea-based blend composition, or a combination thereof. It is well known in the field of fertilizer manufacturing that additional compounds can be added in two main ways. First, they can be added during the manufacturing process. Almost all manufacturing processes of fertilizer compositions involve the formation of a melt which is then granulated using various techniques known in the field. It is then possible to add the additional compounds in the melt before the granulation step. The alkaline or alkaline forming compound may be added in a stream of reagents used to prepare the melt, it may be added in the mother liquor of the melt, i.e. before a step of concentration/evaporation to reduce the water content of the composition, it may be added to the melt just before the granulation step. It is usually desirable to include a mixing step to ensure that the additional compounds are equally distributed in the melt to obtain homogeneous particles. Secondly, the alkaline or alkaline-forming compound may be added on the fertilizer particles. This allows a greater versatility of the plant where standard particles containing the main fertilizer nutrients are produced in a continuous way and the particles can then be modified according to market requirements or regulations.

The stabilizer may be a solid, in particular a particulate material, a liquid, or a suspension (solid in liquid).

In one embodiment, the stabilizer is applied as a coating to the particles of the urea-based blend composition, in particular to the urea-based compound in particulate form and/or to the component comprising an ammonium source in particulate form.

When in particulate form, the particle size (dp50) of the stabilizer is between 1 and 1000 µm, in particular between 10 and 500 µm, as determined by mesh sieve screening. For example, for CaO, a dp50 of about 22 µm was found most effective.

By including the stabilizer into the urea-based blend composition comprising a urea-based compound in particulate form, a component comprising an ammonium source in particulate form and a urease inhibitor of the type phosphoric triamide, the stability of the urease inhibitor of the type phosphoric triamide is greatly improved, leading, among others, to the possibility of a more prolonged storage while keeping the urease inhibition property, before subsequent use of said urea-based blend composition.

Within the context of this application, the wording "able to interact" means that the stabilizer is able to react in any way (ionic, covalent, chelating, etc.) with the component comprising an ammonium source in particulate form in order to immobilize the ammonium source and/or convert it into a form which is less reactive with the urease inhibitor of the type phosphoric triamide. This excludes, for example, organic alkaline solvents for the urease inhibitor of the type phosphoric triamide, which do not interact with the component comprising an ammonium source in particulate form.

The stabilizer is applied to the composition comprising the urea-based compound and thee component comprising an ammonium source in particulate form as a coating by common application techniques, such as coating and blending techniques, well known to the skilled person, such as spray-coating and drum-coating. It is preferred that the stabilizer and the urease inhibitor of the type phosphoric triamide is in intimate contact with each other, in order for the stabilizer to be effective. This can be achieved, in particular, through the application of the urease inhibitor of the type phosphoric triamide, the stabilizer and an optional anti-caking and/or moisture repellent and/or anti-dusting agent, to the particles, either successively, or simultaneously, for example as a liquid anti-caking and/or moisture repellent and/or anti-dusting agent comprising the urease inhibitor of the type phosphoric triamide and the stabilizer.

### Urea-based compound

In one embodiment, the urea-based compound is be selected from the group consisting of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN), urea ammonium sulphate (UAS), urea ammonium phosphate (UAP), urea potassium salts (UK) such as salts derived from mixtures of urea with MPO and/or SOP, or mixtures thereof. In one embodiment, the urea-based compound is urea.

The urea-based compound may be a granulated or prilled material that is commonly and widespread available. It may contain elemental sulphur, be coated with micronutrients or other nutrients, or be treated in any other way.

In one embodiment, the solid, particulate, urea-based blend composition comprises from about 40 to 99 weight% of a urea-based compound in particulate form.

In one embodiment, the particle size (dp50) of the urea-based compound in particulate form is between 1.0 and 6.0 mm, in particular between 2.0 and 4.0 mm, more in particular between 3.0 and 5.0 mm, even more in particular between 2.5 and 3.6 mm, as determined by mesh sieve screening. This size is a common size for particles suitable for agricultural applications. They can be easily spread in the filed with, for example, mechanical means, such as spreaders, and they dissolve into the soil in a reasonable amount of time.

### Component comprising an ammonium source

In one embodiment, the component comprising an ammonium source in particulate form is selected from the group consisting of ammonium nitrate, calcium ammonium nitrate, ammonium sulphate nitrate, potassium ammonium nitrate, ammonium phosphate, such as mono-ammonium phosphate (MAP) and di-ammonium phosphate (DAP), ammonium sulphate (AS), urea ammonium sulphate, urea calcium ammonium nitrate, or mixtures thereof.

These components are well known in the field of agriculture.

The component may be a granulated or prilled material that is commonly and widespread available. It may contain elemental sulphur, be coated with micronutrients or other nutrients, or be treated in any other way.

Urea-based blend compositions are interesting in agriculture because of the possibility to provide several nutrients to the plants in a single application. For example, a blend composition comprising particles of urea and MAP provides nitrogen and phosphorus to plants. It is also easy to vary the relative amount of components in a blend composition depending on the requirements of the plants.

In one embodiment, the urea-based blend composition comprises from about 0.1 to 60 weight% of the component comprising an ammonium source in particulate form.

In one embodiment, the particle size (dp50) of the component comprising an ammonium source in particulate form is between 1.0 and 6.0 mm, in particular between 2.0 and 4.0 mm, more in particular between 3.0 and 5.0 mm, even more in particular between 2.5 and 3.6 mm, as determined by mesh sieve screening. This size is a common size for particles suitable for agricultural applications. They can be easily spread in the filed with, for example, mechanical means, such as spreaders, and they dissolve into the soil in a reasonable amount of time.

### Cation source

The urea-based blend composition according to the present disclosure comprises a cation source, different from the alkaline or alkaline-forming inorganic or organic compound, comprising a cation selected from the group consisting of Fe²⁺, Fe³⁺, Mn²⁺, and Ni²⁺.

A large range of metal ions are known to be able to fix ammonia and form metal ammine complexes. For an agricultural application, zinc, nickel or copper may be the cation source of choice since these elements are required by plants for their growth. So, adding them to the urea-based blend compositions not only solves the issues of urease inhibitor stability and ammonia emissions, but also provides an additional valuable nutrient to the crops. However, it is not sure how stable metal ammine complexes behave once they are distributed in a field, and whether the metal ammine complexes are absorbed by plants. It is usually accepted that metal sources with organic ligands such as EDTA are preferred sources of micronutrients for agricultural uses because of their stability, whereas metal salts tend to oxidize rapidly and become unavailable to plants.

Within the context of this disclosure, a cation source refers to a chemical entity that dissociates into a cation when added to an aqueous solution at pH = 7 and under standard temperature and pressure conditions, for example from about 15 to 30 °C, and about 105 Pa. The cation is selected from the group consisting of Fe²⁺, Fe³⁺, Mn²⁺ and Ni²⁺. So the cation source is a metal source. In one embodiment, a cation source is a metal salt or metal complex comprising a metal atom selected from the group consisting of Fe²⁺, Fe³⁺, Mn²⁺,and Ni²⁺.

The cation source is a different compound or chemical entity from the alkaline or alkaline-forming inorganic or organic compound mentioned above. The main role of the alkaline or alkaline-forming inorganic or organic compound is to improve the stability of the urease inhibitor, whereas the main role of the cation source is to prevent ammonia emissions during storage of the solid, particulate composition. The cation source may also improve the stability of the urease inhibitor.

In one embodiment, the cation source comprises Mn²⁺, in particular a manganese sulphate. Manganese sulphate may be present as an anhydride complex or hydrate complex. In one embodiment, the cation source comprises Ni²⁺, in particular a nickel sulphate. Nickel sulphate may be present as an anhydride complex or hydrate complex.

In one embodiment, the cation source comprises a cation selected from the group consisting of Mn²⁺ and Ni²⁺.

The cation source is present in the composition at a level of 0.0001 to 5.0 weight%, in particular 0.02 to 2.0 weight%, more in particular 0.05 to 1.0 weight%, relative to the total weight of the composition. The amount of cation source needs to be adjusted so that it can absorb most of the ammonia given off during storage. Overloading the fertilizer particle is not desirable as it may affect other properties of the particles, such as particle strength, flowability, or tendency to absorb water. Further, it is not economical to add unnecessary material to a commercialized product. So, it may be desirable to limit the amount of cation source to 5.0 weight% compared to the total weight of the urea-based blend composition. The amount of cation source may be adapted to the forecast of storage time for each particular batch. Ammonia is released regularly during storage, so the longer the fertilizer particles are stored, the higher loading of cation source should be.

In one embodiment, the weight ratio of alkaline or alkaline-forming compound to the cation source ranges from 1:20 to 1:2, in particular from 1:15 to 1:2, more in particular from 1:10 to 1:4. The rate of ammonia volatilization is proportional to the amount of alkaline or alkaline-forming compounds in the urea-based blend composition: the more alkaline compound, the higher the volatilization rate. So, it is desirable to adapt the amount of cation source that will fix the ammonia released to the amount of alkaline compound. In general, it was observed that an excess of cation source, in terms of weight% compared to the total weight of the composition, is desirable to obtain the desired effect on the ammonia volatilization.

### Anti-caking and/or moisture repellent and/or anti-dusting agent

In one embodiment, an anti-caking and/or moisture repellent and/or anti-dusting agent is applied onto the particulate components of the urea-based blend composition, wherein the agent is able to increase the moisture repellence of the urea-based compound in particulate form and/or the component comprising an ammonium source in particulate form. Furthermore, the agent may also be able to reduce the dust formation tendency of the composition. In one embodiment, the agent is a coating material. In one embodiment, the agent is a coating material and comprises a non-polar material, in particular a liquid organic material, such as an oil, wax, resin or the like and any mixture thereof. The agent is present in the composition at a level 0 - 1 weight%, in particular 0.0001 -1.0 weight%, more in particular 0.02 - 0.5 weight%, even more in particular 0.1 - 0.2 weight%. Examples of suitable anti-caking and/or moisture repellent and/or anti-dusting agents are vegetable oil (e.g. rapeseed or neem), paraffin and Novoflow anti-caking and/or moisture repellence agents (Novochem Fertilizer Additives from The Netherlands, Kao from Spain, CECA from France, Arrmaz from USA, Clariant from Switzerland, PST Industry from France, etc.). The moisture repellent agent may also be a coating such as disclosed in EP 0768993 A1 (Norsk Hydro ASA) for a nitrogen-containing fertilizer, comprising at least a wax, an oil and a resin which is oil-soluble and miscible with wax.

### Further effects

It was also observed that, under bagged conditions without the presence of a head space, i.e. with the exclusion of moisture, atmospheric gasses such as oxygen, nitrogen, etc., the stability of the urease inhibitor of the type phosphoric triamide, in particular N-(n-butyl) thiophosphoric triamide (nBTPT), was further increased. Hence, also described is a packaged, in particular bagged, urea-based blend composition comprising a urea-based compound in particulate form, a component comprising an ammonium source in particulate form, a solid particulate urease inhibitor of the type phosphoric triamide, in particular N-(n-butyl) thiophosphoric triamide (nBTPT), and a cation source, different from the alkaline or alkaline-forming inorganic or organic compound, comprising a cation selected from the group consisting of Fe²⁺, Fe³⁺, Mn²⁺ and Ni²⁺.

As used in this application, "packaged" means that the product is shielded of from the environment such that it is in essence not in contact with moisture and atmospheric gasses during the period it is packaged. Hence, the package may be a bag, container, box, etc., being in principle all packaging without the presence of a head space that is filled with an atmosphere such as air. As used in this application, "bagged" means that the product is packaged in manageable unit amounts, such as 5 kg, 10 kg, 15 kg, 20 kg, 25 kg, 50 kg, or more, and usually packaged using a plastic material, in particular a foil, from such materials as paper, cardboard, polyethylene, polyvinyl and polycarbonate.

In one embodiment, the urea-based blend composition is packaged without the presence of a head space.

### Blends

In one embodiment, the solid, particulate urea-based blend composition according to the invention is a homogeneous blend composition, wherein all particles of the blend are randomly in intimate contact with each other.

According to one aspect of the invention, the solid, particulate, urea-based blend composition according to the present invention comprises:
- 40-99 weight% of a urea-based compound in particulate form;
- 0.1-60 weight% of a component comprising an ammonium source in particulate form;
- 0.0001 - 1.0 weight% of a urease inhibitor of the type phosphoric triamide, in particular N-(n-butyl) thiophosphoric triamide;
- 0.0001 - 1.0 weight% of an alkaline or alkaline-forming inorganic or organic compound that is able to interact with the component comprising an ammonium source in particulate form, in particular selected from the group consisting of calcium oxide, calcium carbonate, zinc oxide and magnesium oxide, and mixtures thereof, more in particular wherein the compound is magnesium oxide;
- 0.0001 - 5.0 weight% of a cation source, different from the alkaline or alkaline-forming inorganic or organic compound, comprising a cation selected from the group consisting of Fe²⁺, Fe³⁺, Mn²⁺ and Ni²⁺ ; and
- 0 - 1 weight% of an anti-caking and/or moisture repellent and/or anti-dusting agent; adding up to 100 weight%.

Without forming part of the invention, mention is done to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium phosphate (MAP or DAP) in particulate form, potassium chloride (MOP), calcium oxide (as the stabilizer) and a zinc sulphate (as the cation source).

Without forming part of the invention, mention is done to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium phosphate (MAP or DAP) in particulate form, magnesium oxide (as the stabilizer) and a zinc sulphate (as the cation source).

Without forming part of the invention, mention is done to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium nitrate in particulate form, magnesium oxide (as the stabilizer) and a zinc sulphate (as the cation source).

Without forming part of the invention, mention is done to a solid, particulate, urea-based blend composition comprising urea in particulate form either coated or melt-mixed with a urease inhibitor of the type phosphoric triamide, in particular N-(n-butyl) thiophosphoric triamide (nBTPT), ammonium sulphate (AS) in particulate form, a zinc sulphate, and magnesium oxide.

In one embodiment, the urea-based blend composition comprises a component comprising a potassium source and/or a phosphorus source, such as phosphate salts or potassium salts. Potassium and phosphorus are the two other primary nutrients for plants and crops.

In one embodiment, the urea-based blend composition comprises a source of secondary nutrient (magnesium, calcium, sulfur) and/or a source of micronutrients (manganese, iron, boron, molybdenum, zinc copper, nickel).

### Use of the blend composition

The solid, particulate urea-based blend composition according to the invention is in particular suitable as a fertilizer, in particular for supporting the growth of agricultural products on a sulphur - deficient soil, for supporting the growth of agricultural products on a phosphor - deficient soil, for supporting the growth of agricultural products on a potassium - deficient soil.

### Method

The invention further relates to a method for the manufacture of a solid, particulate urea-based blend composition comprising a urea-based compound in particulate form, a components comprising an ammonium source in particulate form, a urease inhibitor of the type phosphoric triamide, in particular N-(n-butyl) thiophosphoric triamide (nBTPT) and a cation source, different from the alkaline or alkaline-forming inorganic or organic compound, comprising 0.0001 to 5.0 weight% of a cation selected from the group consisting of Fe²⁺, Fe³⁺, Mn²⁺ and Ni²⁺.

In another aspect, a method for the manufacture of a solid, particulate, urea-based blend composition according to the present disclosure is provided. The method comprises the steps of:
1) providing a urea-based particulate material which is treated with 0.0001 to 1.0 weight% of a urease inhibitor in solid particulate or liquid form, in particular wherein the urease inhibitor is N-(n-butyl) thiophosphoric triamide (nBTPT);
2) providing a particulate material, comprising a component comprising an ammonium source;
3) providing 0.0001 to 1.0 weight% of an alkaline or alkaline-forming inorganic or organic compound that is able to interact with the component comprising an ammonium source in particulate form;
4) providing 0.0001 to 5.0 weight% of a cation source, different from the alkaline or alkaline-forming inorganic or organic compound, comprising a cation selected from the group consisting of Fe²⁺ , Fe³⁺ , Mn²⁺ , and Ni²⁺.
5) mixing the components provided in steps 1), 2), 3) and 4);
6) optionally, applying an agent to the particulate compounds, wherein the agent that is able to increase at least the anticaking and/or water-repellence and/or anti-dusting properties of said urea-based blend composition.

Steps 1), 2),3), 4) and 6) can be interchanged or steps 1), 2), 3), 4) and 6) can be performed simultaneously, for example as the addition of a liquid anti-caking and/or moisture repellent agent composition comprising the urease inhibitor of the type phosphoric triamide and the alkaline or alkaline-forming compound.

### Kit-of-parts

Also described is a kit of parts for use with a urea-based blend composition is provided. The kit of parts comprises an alkaline or alkaline-forming inorganic or organic compound that is able to interact with the component comprising an ammonium source in particulate form; a urease inhibitor of the type phosphoric triamide in solid particulate or liquid form, in particular wherein the urease inhibitor is N-(n-butyl) thiophosphoric triamide (nBTPT); a cation source, different from the alkaline or alkaline-forming inorganic or organic compound, comprising a cation selected from the group consisting of Fe²⁺, Fe³⁺, Mn²⁺ and Ni²⁺; optionally, an anti-caking and/or moisture repellent and/or anti-dusting agent.

Such composition or kit of parts can then be added to the urea-based blend composition, in particular to the particulate urea-based compound or to the component comprising an ammonium source in particulate form, to obtain the solid, particulate, urea-based blend composition comprising a urea-based compound in particulate form, a component comprising an ammonium source in particulate form, the stabilizer, a urease inhibitor of the type phosphoric triamide according to the invention and a cation source.

The preferred embodiments of the method according to the invention will now be illustrated by means of the following non-limitative examples.

### Experimental details:

### 1. Volatilization measurements (ammonia release 2L diffusion kit)

200 g of UAS product, treated with nBTPT/stabilizer/cation source are put in a 2L plastic container. Through the lid, a Draeger tube is placed for the measurement of vol% ammonia. The Draeger tube turns from yellow to bleu/purple when ammonia is absorbed by the tube. The amount of vol% ammonia released can be followed in time.

### 2. nBTPT measurements

For lab scale experiments, 1.2 kg of solid UAS fertilizer material was added to a lab scale drum. In a next step, the nBTPT/stabilizer material was slowly added. A residence time of 10 minutes was applied, and the rotating speed of the drum was consequently the same in each experiment. In case a moisture-repellent coating was added, a nebulizer was used and depending on the order of addition, the moisture-repellent coating was added before or after addition of the nBTPT material. Before use, the moisture-repellent coating was preheated to 80 °C. Larger scale experiments with amounts up to 40 kg of fertilizer material were performed in a concrete mixer.

Experiments 1 and 2 are conducted on homogeneous particles comprising urea ammonium sulphate. Experiments 3 and 4 are conducted on physical blends comprising urea particles.

### Experiment 1 (not covered by the invention )

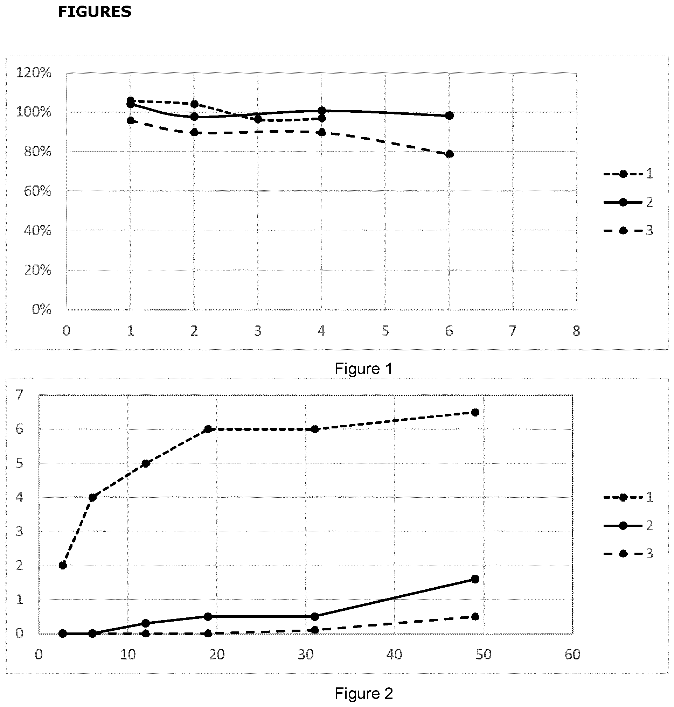

A urea ammonium sulphate-based particulate composition containing about 76 weight% of urea and about 23 weight% of ammonium sulphate (i.e. 40 weight% of nitrogen and 5.5 weight% of sulphur, as expressed in S) was coated with 0.046 weight% of nBTPT, as urease inhibitor, and an inorganic stabilizer, magnesium oxide (0.046 or 0.023 weight%). Optionally, a zinc sulphate, anhydrous zinc sulphate or monohydrate zinc sulphate, was coated on the particles (0.46 weight%). The products were stored separately in bags at room temperature and ambient humidity over several weeks. Product samples were taken at different times from a bag and the amount of nBTPT still present was measured by HPLC according to the procedure CEN 15688-2007, the results are presented in Figure 1.

The X axis represents the time point (in weeks) when the samples were taken. The Y-axis indicates the amount of nBTPT (in % of amount recovered compared to initial samples). The "1" line represents the results for the reference sample where the coating comprised MgO and nBTPT (1/1 ratio, 462 ppm). The "2" line represents the results for the sample where the coating comprised ZnSO4·H2O, MgO and nBTPT (10/1/1 ratio, 462 ppm of nBTPT). The "3" line represents the results for a sample where the coating comprised anhydrous ZnSO4, MgO and nBTPT (10/1/1 ratio, 462 ppm of nBTPT). Samples were taken from each bag only once, as multiple openings increase the decomposition of nBTPT. It can be observed that more nBTPT is recovered in the presence of the monohydrate zinc sulphate, so the urease inhibitor is stabilized by the cation source.

An ammonia volatilization test was also carried out with the samples prepared above and the results are summarized in Figure 2. The X-axis indicates the time point (in days) when the samples were taken from the bags. The Y-axis indicates the amount of ammonia (in % of the amount of ammonium present initially in the product) that is evaporated. The "1" line represents the results for the reference sample where the coating comprised MgO and nBTPT (1/1 ratio, 462 ppm). The "2" line represents the results for the sample where the coating comprised ZnSO4·H2O, MgO and nBTPT (10/1/1 ratio, 462 ppm of nBTPT). The "3" line represents the results for a sample where the coating comprised anhydrous ZnSO₄, MgO and nBTPT (10/1/1 ratio, 462 ppm of nBTPT). After seven weeks of storage, the two products comprising the cation source showed a decrease in ammonia volatilization of respectively 60 % for the monohydrate compound, and 92% for the anhydrous compound.

### Experiment 2 (contains examples not covered by the invention)

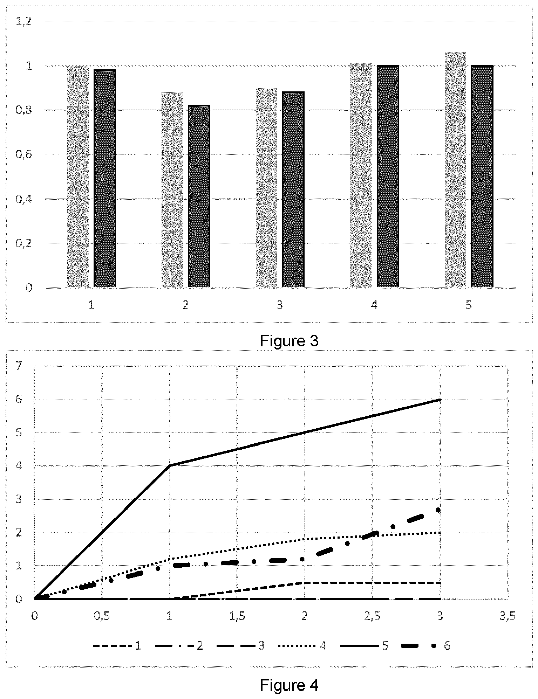

A urea ammonium sulphate-based particulate composition containing about 76 weight% of urea and about 23 weight% of ammonium sulphate (i.e. 40 weight% of nitrogen and 5.5 weight% of sulphur, as expressed in S) was coated with 0.046 weight% of nBTPT, as urease inhibitor, and an inorganic stabilizer, magnesium oxide (0.046 weight%). Optionally, a cation source in solid particulate form, zinc sulphate, iron sulphate, nickel sulphate or manganese sulphate, was coated on the particles. The products were stored separately in bags at room temperature and ambient humidity over three weeks. Product samples were taken at different times and the amount of *nBTPT* still present was measured by HPLC according to the procedure CEN 15688-2007, the results are presented in Figure 3. The X-axis indicates the sample number: "1" comprises ZnSO4·H2O, MgO and nBTPT (3/0.5/1 weight ratio), "2" comprises FeSO₄·7H₂O, MgO and nBTPT (4.6/0.5/1 weight ratio), "3" comprises NiSO₄·6H₂O, MgO and nBTPT (4.4/0.5/1 weight ratio), "4" comprises MnSO₄·H₂O, MgO and nBTPT (2.8/0.5/1 weight ratio), "5" comprises MgO and nBTPT (1/1 weight ratio). The Y-axis indicates the fraction of nBTPT, compared to the amount present initially, recovered in the samples. For each product, two samples were taken: after 1 (left column for each sample number) and 3 weeks (right column). It can be observed that zinc sulphate and manganese sulphate do not lead to an increased decomposition of nBTPT compared to the sample only containing magnesium oxide. Figure 4 describes the results of the ammonia volatilization tests performed on the same materials. The X axis represents the time point (in weeks) when the samples were taken. The Y-axis indicates the amount of ammonia (in % of the amount of ammonium present initially in the product) that is evaporated. The samples number are identical as in Figure 3, in addition line "6" comprises MgSO₄, MgO and nBTPT (10/1/1 weight ratio). The lines "2" and "3" are identical and located on the baseline (no ammonia detected during the three weeks of the experiment). It can be observed that the four cation sources and MgSO₄ are efficiently reducing the ammonia volatilization compared to the reference sample comprising only magnesium oxide.

### Experiment 3 (contains examples not covered by the invention)

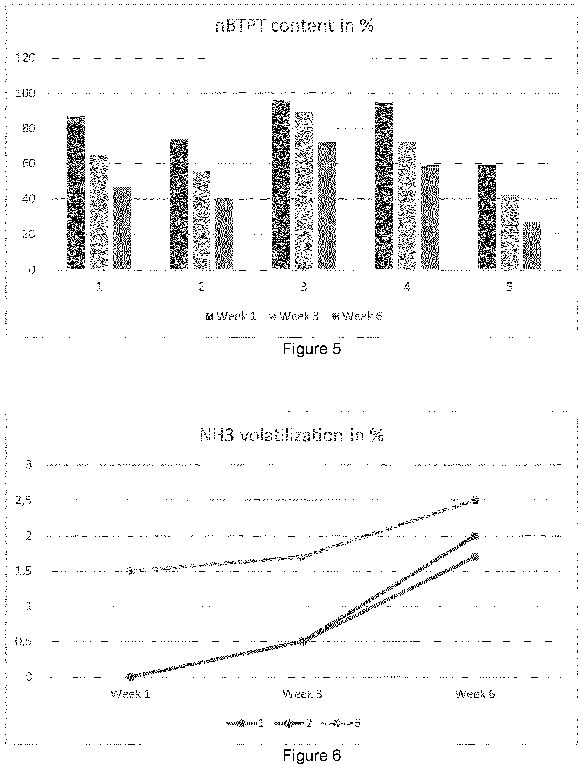

Urea particles containing 46 weight% of nitrogen was coated with 0.046 weight% of nBTPT, as urease inhibitor, and an inorganic stabilizer, magnesium oxide (0.023 weight%). Optionally, a cation source in solid particulate form, zinc sulphate, iron sulphate, nickel sulphate or manganese sulphate, was coated on the particles. The coated urea particles were blended with particles of ammonium sulphate in a 1:1 weight ratio and stored separately, according to the presence or not of the cation source, in bags at room temperature and ambient humidity over three weeks. Product samples were taken at different times and the amount of nBTPT still present was measured by HPLC according to the procedure CEN 15688-2007, the results are presented in Figure 5. The X-axis indicates the sample number: "1" comprises ZnSO4·H2O, MgO and nBTPT (3/0.5/1 weight ratio), "2" comprises FeSO₄·7H₂O, MgO and nBTPT (4.6/0.5/1 weight ratio), "3" comprises NiSO₄·6H₂O, MgO and nBTPT (4.4/0.5/1 weight ratio), "4" comprises MnSO₄·H₂O, MgO and nBTPT (2.8/0.5/1 weight ratio), "5" comprises only nBTPT and no MgO. The Y-axis indicates the percentage of nBTPT, compared to the amount present initially, recovered in the samples. For each product, three samples were taken: after 1 week (left column for each sample number), 3 weeks (middle column), and 6 weeks (right column). It can be observed that all the combinations of MgO and a cation source increase the stability of nBTPT. A mistake happened during the handling of sample "2" after week 1 and the results were not reliable (indicated over 100% of nBTPT compared to initial sample).

Figure 6 describes the results of the ammonia volatilization tests performed on the samples "1" and "2". The X axis represents the time point (in weeks) when the samples were taken. The Y-axis indicates the amount of ammonia (in % of the amount of ammonium present initially in the product) that is evaporated. The sample numbers are identical as in Figure 3, and in addition line "6" comprises MgSO₄, MgO and nBTPT (10/1/1 weight ratio). It can be observed that zinc sulphate and iron sulphate are efficiently reducing the ammonia volatilization compared to the sample comprising magnesium oxide and magnesium sulphate.

### Experiment 4 (contains examples not covered by the invention)

Urea particles containing 46 weight% of nitrogen was coated with 0.046 weight% of nBTPT, as urease inhibitor, and an inorganic stabilizer, magnesium oxide (0.023 weight%). Optionally, a cation source in solid particulate form, zinc sulphate, iron sulphate, nickel sulphate or manganese sulphate, was coated on the particles. The coated urea particles were blended with particles of di-ammonium phosphate in a 1:1 weight ratio and stored separately, according to the presence or not of the cation source, in bags at room temperature and ambient humidity over three weeks. Product samples were taken at different times and the amount of nBTPT still present was measured by HPLC according to the procedure CEN 15688-2007, the results are presented in Figure 5. The X-axis indicates the sample number: "1" comprises ZnSO4·H2O, MgO and nBTPT (3/0.5/1 weight ratio), "2" comprises FeSO₄·7H₂O, MgO and nBTPT (4.6/0.5/1 weight ratio), "3" comprises NiSO₄·6H₂O, MgO and nBTPT (4.4/0.5/1 weight ratio), "4" comprises MnSO₄·H₂O, MgO and *nBTPT* (2.8/0.5/1 weight ratio), "5" comprises only nBTPT and no MgO. The Y-axis indicates the percentage of nBTPT, compared to the amount present initially, recovered in the samples. For each product, three samples were taken: after 1 week (left column for each sample number), 3 weeks (middle column), and 6 weeks (right column). Without any stabilizer (sample "5"), nBTPT is very unstable in the presence of a phosphate source. It can be observed that all the combinations of MgO and a cation source increase the stability of nBTPT.

The same samples were analyzed for ammonia volatilization and no ammonia emission was detected within the first 6 weeks for samples "1", "2", and "4". Sample "3" gave off a little bit of ammonia (2.7 vol% after 6 weeks).

## Claims

1. A solid, particulate, urea-based blend composition comprising a urea-based compound in particulate form, a component comprising an ammonium source in particulate form, 0.0001 to 1.0 weight% of a urease inhibitor of the type phosphoric triamide, 0.0001 to 1.0 weight% of an alkaline or alkaline-forming inorganic or organic compound that is able to interact with the component comprising an ammonium source in particulate form, selected from the group consisting of metal oxides, metal carbamates, metal hydroxides, metal acetates and any mixtures thereof, or from the group of organic bases consisting of ammonia, amines, amides, adenines, amidines, guanidines, anilines, carbamates, thiazoles, triazoles, pyridines; imidazoles, benzimidazoles, histidines, phosphazenes, and any mixture thereof **characterized in that** the urea-based blend composition further comprises 0.0001 to 5.0 weight% of a cation source comprising a cation selected from the group consisting of Fe²⁺, Fe³⁺, Mn²⁺, and Ni²⁺,⁺ and wherein said cation source is different from the alkaline or alkaline-forming inorganic or organic compound.

2. The urea-based blend composition according to claim 1, wherein the cation source is present in the composition at a level of 0.02 to 2.0 weight%, more in particular 0.05 to 1.0 weight%, relative to the total weight of the composition.

3. The urea-based blend composition according to any one of claims 1 or 2, wherein the urease inhibitor is present at a level of 0.02 to 0.2 weight%, more in particular 0.03 to 0.06 weight%, relative to the total weight of the urea-based blend composition.

4. The urea-based blend composition according to any one of claims 1 to 3, wherein the urease inhibitor of the type phosphoric triamide is a compound of formula: 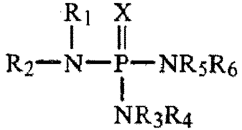 wherein:
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl; or R₁ and R₂ together may form an alkylene or alkenylene chain which may optionally include one or more heteroatoms of divalent oxygen, nitrogen or sulphur completing a 4, 5, 6, 7, or 8 membered ring system; and
R₃, R₄, R₅ and R₆ are individually hydrogen or alkyl having 1 to 6 carbon atoms, in particular wherein the urease inhibitor is N-(n-butyl) thiophosphoric triamide (nBTPT).

5. The urea-based blend composition according to any one of claims 1 to 4, wherein the weight ratio of urease inhibitor of the type phosphoric triamide to the alkaline or alkaline-forming inorganic or organic compound in the urea-based blend composition ranges from 1:15 to 5:1, in particular from 1:10 to 2:1, more in particular from 1:5 to 2:1.

6. The urea-based blend composition according to any one of claims 1 to 5, wherein anyone or more selected from the group consisting of the urease inhibitor of the type phosphoric triamide, the one or more alkaline or alkaline-forming inorganic or organic compound and the cation source, is applied onto the urea-based compound in particulate form or the component comprising an ammonium source in particulate form in liquid or in particulate form, is melt-mixed with the urea-based compound, or a combination thereof.

7. The urea-based blend composition according to any one of claims 1 to 6, wherein the alkaline-forming or alkaline compound is selected from the group consisting of calcium oxide, calcium carbonate, zinc oxide and magnesium oxide, and mixtures thereof.

8. The urea-based blend composition according to any one of claims 1 to 7, wherein the alkaline-forming or alkaline compound is present in the composition at a level of 0.01 to 1.0 weight%, more in particular 0.02 to 1.0 weight%, even more in particular 0.02 to 0.5 weight% relative to the total weight of the composition.

9. The urea-based blend composition according to any one of claims 1 to 8, wherein the composition comprises an anti-caking and/or moisture repellent and/or anti-dusting agent, applied onto the particulate components of the urea-based blend composition, in particular wherein the agent comprises at least a non-polar material, in particular a liquid organic material, such as an oil, wax, resin or the like and any mixture thereof and is present in the composition at a level of 0.0001 -1.0 weight%, in particular 0.02 - 0.5 weight%, more in particular 0.1 - 0.2 weight%.

10. The urea-based blend composition according to any one of claims 1 to 9, wherein the weight ratio of the alkaline or alkaline-forming compound to the cation source ranges from 1:20 to 1:2, in particular from 1:15 to 1:2, more in particular from 1:10 to 1:4.

11. The urea-based blend composition according to any one of claims 1 to 10, wherein the composition contains:
- 40 - 99 weight% of a urea-based compound in particulate form;
- 0.1 - 60 weight% of a component comprising an ammonium source in particulate form;
- 0.0001 - 1.0 weight% of a urease inhibitor of the type phosphoric triamide, in particular N-(n-butyl) thiophosphoric triamide;
- 0.0001 - 1.0 weight% of an alkaline or alkaline-forming inorganic or organic compound that is able to interact with the component comprising an ammonium source in particulate form, in particular wherein the alkaline or alkaline-forming compound is selected from the group consisting of calcium oxide, calcium carbonate, zinc oxide and magnesium oxide, and mixtures thereof;
- 0.0001 - 5.0 weight% of a cation source, different from the alkaline or alkaline-forming inorganic or organic compound, comprising a cation selected from the group consisting of Fe²⁺, Fe³⁺, Mn²⁺, and Ni²⁺.
- 0 -1.0 weight% of an anti-caking and/or moisture repellent and/or anti-dusting agent; adding up to 100 weight%.

12. The urea-based blend composition according to any one of claims 1 to 11, wherein the urea-based compound is selected from the group consisting of urea, urea calcium sulphate (UCaS), urea calcium nitrate (UCaN), urea magnesium nitrate (UMgN), urea calcium phosphate (UCaP), urea magnesium phosphate (UMgP), urea superphosphate (USP), urea calcium ammonium nitrate (UCAN) , urea ammonium sulphate (UAS), urea ammonium phosphate (DAP), urea potassium salts (UK), or mixtures thereof.

13. The urea-based blend composition according to any one of claims 1 to 12, wherein the component comprising an ammonium source in particulate form is selected from the group consisting of ammonium nitrate, calcium ammonium nitrate, ammonium sulphate nitrate, potassium ammonium nitrate, ammonium phosphate, such as mono-ammonium phosphate (MAP) and diammonium phosphate (DAP), ammonium sulphate (AS), urea ammonium sulphate, urea calcium ammonium nitrate, or mixtures thereof.

14. A method for the manufacture of a solid, particulate, urea-based blend composition according to any one of claims 1 to 13, the method comprising the steps of:
1) providing a urea-based particulate material which is treated with 0.0001 to 1.0 weight% of a urease inhibitor in solid particulate or liquid form, in particular wherein the urease inhibitor is N-(n-butyl) thiophosphoric triamide (nBTPT)
2) providing a particulate material, comprising a component comprising an ammonium source;
3) providing 0.0001 to 1.0 weight% of an alkaline or alkaline-forming inorganic or organic compound that is able to interact with the component comprising an ammonium source in particulate form;
4) providing 0.0001 to 5.0 weight% of a cation source comprising a cation selected from the group consisting of Fe²⁺, Fe³⁺, Mn²⁺, and Ni²⁺;
5) mixing the components provided in steps 1), 2), 3) and 4);
6) optionally, applying an agent to the particulate compounds, wherein the agent that is able to increase at least the anticaking and/or water repellence and/or anti-dusting properties of said urea-based blend composition,
the method further **characterized in that** said cation source is different from the alkaline or alkaline-forming inorganic or organic compound.

## Patentansprüche

1. Feste, teilchenförmige Mischungszusammensetzung auf Harnstoffbasis, umfassend eine Verbindung auf Harnstoffbasis in Teilchenform, eine Komponente, die eine Ammoniumquelle in Teilchenform umfasst, 0,0001 bis 1,0 Gew.-% eines Ureasehemmers vom Phosphorsäuretriamidtyp, 0,0001 bis 1,0 Gew.-% einer alkalischen oder alkalibildenden anorganischen oder organischen Verbindung, die in der Lage ist, mit der Komponente, die eine Ammoniumquelle in Teilchenform umfasst, zu interagieren, ausgewählt aus der Gruppe bestehend aus Metalloxiden, Metallcarbamaten, Metallhydroxiden, Metallacetaten und beliebigen Mischungen davon oder aus der Gruppe von organischen Basen bestehend aus Ammoniak, Aminen, Amiden, Adeninen, Amidinen, Guanidinen, Anilinen, Carbamaten, Thiazolen, Triazolen, Pyridinen, Imidazolen, Benzimidazolen, Histidinen, Phosphazenen und einer beliebigen Mischung davon, **dadurch gekennzeichnet, dass** die Mischungszusammensetzung auf Harnstoffbasis ferner 0,0001 bis 5,0 Gew.-% einer Kationenquelle, die ein Kation, das aus der Gruppe bestehend aus Fe²⁺, Fe³⁺, Mn²⁺ und Ni²⁺ ausgewählt ist, umfasst, umfasst, und wobei die Kationenquelle von der alkalischen oder alkalibildenden anorganischen oder organischen Verbindung verschieden ist.

2. Mischungszusammensetzung auf Harnstoffbasis nach Anspruch 1, wobei die Kationenquelle in der Zusammensetzung in einem Gehalt von 0,02 bis 2,0 Gew.-%, spezieller 0,05 bis 1,0 Gew.-%, bezogen auf das Gesamtgewicht der Zusammensetzung, vorliegt.

3. Mischungszusammensetzung auf Harnstoffbasis nach Anspruch 1 oder 2, wobei der Ureasehemmer in einem Gehalt von 0,02 bis 0,2 Gew.-%, spezieller 0,03 bis 0,06 Gew.- %, bezogen auf das Gesamtgewicht der Mischungszusammensetzung auf Harnstoffbasis, vorliegt.

4. Mischungszusammensetzung auf Harnstoffbasis nach einem der Ansprüche 1 bis 3, wobei es sich bei dem Ureasehemmer vom Phosphorsäuretriamidtyp um eine Verbindung der Formel: 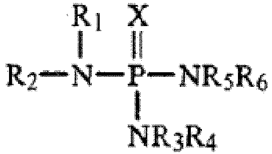
- X für Sauerstoff oder Schwefel steht;
- R₁ für Alkyl, Cycloalkenyl, Aralkyl, Aryl, Alkenyl, Alkinyl oder Cycloalkyl steht; R₂ für Wasserstoff, Alkyl, Cycloalkenyl, Aralkyl, Aryl, Alkenyl, Alkinyl oder Cycloalkyl steht oder R₁ und R₂ gemeinsam unter Vervollständigung eines 4-, 5-, 6-, 7- oder 8-gliedrigen Ringsystems eine Alkylen- oder Alkenylenkette, die gegebenenfalls ein oder mehrere Heteroatome von zweiwertigem Sauerstoff, Stickstoff oder Schwefel enthalten kann, bilden können; und R₃, R₄, R₅ und R₆ jeweils für Wasserstoff oder Alkyl mit 1 bis 6 Kohlenstoffatomen stehen, insbesondere wobei es sich bei dem Ureasehemmer um N-(n-Butyl)thiophosphorsäuretriamid (nBTPT) handelt.

5. Mischungszusammensetzung auf Harnstoffbasis nach einem der Ansprüche 1 bis 4, wobei das Gewichtsverhältnis von Ureasehemmer vom Phosphorsäuretriamidtyp zu alkalischer oder alkalibildender anorganischer oder organischer Verbindung in der Mischungszusammensetzung auf Harnstoffbasis im Bereich von 1:15 bis 5:1, insbesondere von 1:10 bis 2:1, spezieller von 1:5 bis 2:1, liegt.

6. Mischungszusammensetzung auf Harnstoffbasis nach einem der Ansprüche 1 bis 5, wobei eines oder mehrere ausgewählt aus der Gruppe bestehend aus dem Ureasehemmer vom Phosphorsäuretriamidtyp, der einen oder mehreren alkalischen oder alkalibildenden anorganischen oder organischen Verbindungen und der Kationenquelle auf die Verbindung auf Harnstoffbasis in Teilchenform aufgebracht wird bzw. werden oder die Komponente, die eine Ammoniumquelle in Teilchenform umfasst, in flüssiger Form oder in Teilchenform mit der Verbindung auf Harnstoffbasis schmelzegemischt wird oder eine Kombination davon.

7. Mischungszusammensetzung auf Harnstoffbasis nach einem der Ansprüche 1 bis 6, wobei die alkalibildende oder alkalische Verbindung aus der Gruppe bestehend aus Calciumoxid, Calciumcarbonat, Zinkoxid und Magnesiumoxid und Mischungen davon ausgewählt ist.

8. Mischungszusammensetzung auf Harnstoffbasis nach einem der Ansprüche 1 bis 7, wobei die alkalibildende oder alkalische Verbindung in der Zusammensetzung in einem Gehalt von 0,01 bis 1,0 Gew.-%, spezieller 0,02 bis 1,0 Gew.-%, noch spezieller, 0,02 bis 0,5 Gew.-%, bezogen auf das Gesamtgewicht der Zusammensetzung, vorliegt.

9. Mischungszusammensetzung auf Harnstoffbasis nach einem der Ansprüche 1 bis 8, wobei die Zusammensetzung ein auf die teilchenförmigen Komponenten der Mischungszusammensetzung auf Harnstoffbasis aufgebrachtes Antibackmittel und/oder feuchtigkeitsabweisendes Mittel und/oder Antistaubmittel umfasst, insbesondere wobei das Mittel mindestens ein unpolares Material, insbesondere ein flüssiges organisches Material, wie ein Öl, ein Wachs, ein Harz oder dergleichen und eine beliebige Mischung davon umfasst und in der Zusammensetzung in einem Gehalt von 0,0001-1,0 Gew.-%, insbesondere 0,02-0,5 Gew.-%, spezieller 0,1-0,2 Gew.-%, vorliegt.

10. Mischungszusammensetzung auf Harnstoffbasis nach einem der Ansprüche 1 bis 9, wobei das Gewichtsverhältnis von alkalischer oder alkalibildender Verbindung zu Kationenquelle im Bereich von 1:20 bis 1:2, insbesondere von 1:15 bis 1:2, spezieller von 1:10 bis 1:4, liegt.

11. Mischungszusammensetzung auf Harnstoffbasis nach einem der Ansprüche 1 bis 10, wobei die Zusammensetzung Folgendes enthält:
- 40 - 99 Gew.-% einer Verbindung auf Harnstoffbasis in Teilchenform;
- 0,1 - 60 Gew.-% einer Komponente, die eine Ammoniumquelle in Teilchenform umfasst;
- 0,0001 - 1,0 Gew.-% eines Ureasehemmers vom Phosphorsäuretriamidtyp, insbesondere N-(n-Butyl)thiophosphorsäuretriamid;
- 0,0001 - 1,0 Gew.-% einer alkalischen oder alkalibildenden anorganischen oder organischen Verbindung, die in der Lage ist, mit der Komponente, die eine Ammoniumquelle in Teilchenform umfasst, zu interagieren, insbesondere wobei die alkalische oder alkalibildende Verbindung aus der Gruppe bestehend aus Calciumoxid, Calciumcarbonat, Zinkoxid und Magnesiumoxid und Mischungen davon ausgewählt ist;
- 0,0001 - 5,0 Gew.-% einer Kationenquelle, die von der alkalischen oder alkalibildenden anorganischen oder organischen Verbindung verschieden ist, umfassend ein Kation, das aus der Gruppe bestehend aus Fe²⁺, Fe³⁺, Mn²⁺ und Ni²⁺ ausgewählt ist;
- 0 - 1,0 Gew.-% eines Antibackmittels und/oder feuchtigkeitsabweisenden Mittels und/oder Antistaubmittels; wobei sich die Summe auf 100 Gew.-% beläuft.

12. Mischungszusammensetzung auf Harnstoffbasis nach einem der Ansprüche 1 bis 11, wobei die Verbindung auf Harnstoffbasis aus der Gruppe bestehend aus Harnstoff, Harnstoff-Calciumsulfat (UCaS), Harnstoff-Calciumnitrat (UCaN), Harnstoff-Magnesiumnitrat (UMgN), Harnstoff-Calciumphosphat (UCaP), Harnstoff-Magnesiumphosphat (UMgP), Harnstoff-Superphosphat (USP), Harnstoff-Calciumammoniumnitrat (UCAN), Harnstoff-Ammoniumsulfat (UAS), Harnstoff-Ammoniumphosphat (UAP), Harnstoff-Kaliumsalzen (UK) oder Mischungen davon ausgewählt ist.

13. Mischungszusammensetzung auf Harnstoffbasis nach einem der Ansprüche 1 bis 12, wobei die Komponente, die eine Ammoniumquelle in Teilchenform umfasst, aus der Gruppe bestehend aus Ammoniumnitrat, Calciumammoniumnitrat, Ammoniumsulfatnitrat, Kaliumammoniumnitrat, Ammoniumphosphat, wie Monoammoniumphosphat (MAP) und Diammoniumphosphat (DAP), Ammoniumsulfat (AS), Harnstoff-Ammoniumsulfat, Harnstoff-Calciumammoniumnitrat oder Mischungen davon ausgewählt ist.

14. Verfahren zur Herstellung einer festen, teilchenförmigen Mischungszusammensetzung auf Harnstoffbasis nach einem der Ansprüche 1 bis 13, wobei das Verfahren die folgenden Schritte umfasst:
1) Bereitstellen eines teilchenförmigen Materials auf Harnstoffbasis, das mit 0,0001 bis 1,0 Gew.-% eines Ureasehemmers in fester teilchenförmiger oder flüssiger Form behandelt worden ist, insbesondere wobei es sich bei dem Ureasehemmer um N-(n-Butyl)thiophosphorsäuretriamid (nBTPT) handelt;
2) Bereitstellen eines teilchenförmigen Materials, das eine Komponente, die eine Ammoniumquelle umfasst, umfasst;
3) Bereitstellen von 0,0001 bis 1,0 Gew.-% einer alkalischen oder alkalibildenden anorganischen oder organischen Verbindung, die in der Lage ist, mit der Komponente, die eine Ammoniumquelle in Teilchenform umfasst, zu interagieren;
4) Bereitstellen von 0,0001 bis 5,0 Gew.-% einer Kationenquelle, umfassend ein Kation, das aus der Gruppe bestehend aus Fe²⁺, Fe³⁺, Mn²⁺ und Ni²⁺ ausgewählt ist;
5) Mischen der in den Schritten 1), 2), 3) und 4) bereitgestellten Komponenten;
6) gegebenenfalls Aufbringen eines Mittels auf die teilchenförmigen Verbindungen, wobei das Mittel in der Lage ist, zumindest die Antiback- und/oder Wasserabweisungs- und/oder Antistaubeigenschaften der Mischungszusammensetzung auf Harnstoffbasis zu erhöhen,
wobei das Verfahren ferner **dadurch gekennzeichnet ist, dass** die Kationenquelle von der alkalischen oder alkalibildenden anorganischen oder organischen Verbindung verschieden ist.

## Revendications

1. Composition de mélange à base d'urée, particulaire, solide comprenant un composé à base d'urée sous forme particulaire, un composant comprenant une source d'ammonium sous forme particulaire, 0,0001 à 1,0 % en poids d'un inhibiteur d'uréase du type triamide phosphorique, 0,0001 à 1,0 % en poids d'un composé inorganique ou organique alcalin ou formant un alcalin qui est capable d'interagir avec le composant comprenant une source d'ammonium sous forme particulaire, choisi dans le groupe constitué par des oxydes métalliques, des carbamates métalliques, des hydroxydes métalliques, des acétates métalliques et de quelconques mélanges correspondants, ou dans le groupe de bases organiques constitué par l'ammoniac, les amines, les amides, les adénines, les amidines, les guanidines, les anilines, les carbamates, les thiazoles, les triazoles, les pyridines ; les imidazoles, les benzimidazoles, les histidines, les phosphazènes et un quelconque mélange correspondant, **caractérisée en ce que** la composition de mélange à base d'urée comprend en outre 0,0001 à 5,0 % en poids d'une source de cations comprenant un cation choisi dans le groupe constitué par Fe²⁺, Fe³⁺, Mn²⁺ et Ni²⁺ et ladite source de cations étant différente du composé inorganique ou organique alcalin ou formant un alcalin.

2. Composition de mélange à base d'urée selon la revendication 1, la source de cation étant présente dans la composition à un taux de 0,02 à 2,0 % en poids, plus particulièrement de 0,05 à 1,0 % en poids, par rapport au poids total de la composition.

3. Composition de mélange à base d'urée selon l'une quelconque des revendications 1 ou 2, l'inhibiteur d'uréase étant présent à un taux de 0,02 à 0,2 % en poids, plus particulièrement de 0,03 à 0,06 % en poids, par rapport au poids total de la composition de mélange à base d'urée.

4. Composition de mélange à base d'urée selon l'une quelconque des revendications 1 à 3, l'inhibiteur d'uréase du type triamide phosphorique étant un composé de formule : 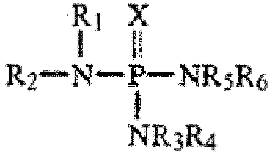 dans laquelle :
X est oxygène ou soufre ;
R₁ est alkyle, cycloalcényle, aralkyle, aryle, alcényle, alcynyle ou cycloalkyle ;
R₂ est hydrogène, alkyle, cycloalcényle, aralkyle, aryle, alcényle, alcynyle ou cycloalkyle ;
ou R₁ et R₂ ensemble peuvent former une chaîne alkylène ou alcénylène qui peut éventuellement comprendre un ou plusieurs hétéroatomes parmi oxygène, azote ou soufre divalent complétant un système cyclique à 4, 5, 6, 7 ou 8 chaînons ; et R₃, R₄, R₅ et R₆ sont individuellement hydrogène ou alkyle ayant 1 à 6 atomes de carbone, en particulier, l'inhibiteur d'uréase étant le triamide N-(n-butyl)thiophosphorique (nBTPT).

5. Composition de mélange à base d'urée selon l'une quelconque des revendications 1 à 4, dans laquelle le rapport en poids de l'inhibiteur d'uréase du type triamide phosphorique sur le composé inorganique ou organique alcalin ou formant un alcalin dans la composition de mélange à base d'urée est dans la plage de 1:15 à 5:1, en particulier de 1:10 à 2:1, plus particulièrement de 1:5 à 2:1.

6. Composition de mélange à base d'urée selon l'une quelconque des revendications 1 à 5, l'un quelconque ou plusieurs choisis dans le groupe constitué par l'inhibiteur d'uréase du type triamide phosphorique, le ou les composés inorganiques ou organiques alcalins ou formant un alcalin et la source de cation, étant appliqué(s) sur le composé à base d'urée sous forme particulaire ou le composant comprenant une source d'ammonium sous forme particulaire sous forme liquide ou sous forme particulaire, étant mélangé à l'état fondu avec le composé à base d'urée, ou une combinaison correspondante.

7. Composition de mélange à base d'urée selon l'une quelconque des revendications 1 à 6, le composé alcalin ou formant un alcalin étant choisi dans le groupe constitué par l'oxyde de calcium, le carbonate de calcium, l'oxyde de zinc et l'oxyde de magnésium et des mélanges correspondants.

8. Composition de mélange à base d'urée selon l'une quelconque des revendications 1 à 7, dans laquelle le composé alcalin ou formant un alcalin est présent dans la composition à un taux de 0,01 à 1,0 % en poids, plus particulièrement 0,02 à 1,0 % en poids, encore plus particulièrement 0,02 à 0,5 % en poids par rapport au poids total de la composition.

9. Composition de mélange à base d'urée selon l'une quelconque des revendications 1 à 8, dans laquelle la composition comprend un agent antiagglomérant et/ou rebutant l'humidité et/ou anti-poussière, appliqué sur les composants particulaires de la composition de mélange à base d'urée, en particulier dans laquelle l'agent comprend au moins un matériau non polaire, en particulier un matériau organique liquide, tel qu'une huile, une cire, une résine ou similaire et un quelconque mélange correspondant, et est présent dans la composition à un taux de 0,0001 -1,0 % en poids, en particulier 0,02 - 0,5 % en poids, plus particulièrement 0,1 - 0,2 % en poids.

10. Composition de mélange à base d'urée selon l'une quelconque des revendications 1 à 9, le rapport en poids de composé alcalin ou formant un alcalin sur la source de cations est dans la plage de 1 : 20 à 1 : 2, en particulier de 1 : 15 à 1 : 2, plus particulièrement de 1 : 10 à 1:4.

11. Composition de mélange à base d'urée selon l'une quelconque des revendications 1 à 10, dans laquelle la composition contient :
- 40 à 99 % en poids d'un composé à base d'urée sous forme particulaire ;
- 0,1 à 60 % en poids d'un composant comprenant une source d'ammonium sous forme particulaire ;
- 0,0001 à 1,0 % en poids d'un inhibiteur d'uréase du type triamide phosphorique, en particulier le triamide N-(n-butyl)thiophosphorique ;
- 0,0001 - 1,0% en poids d'un composé inorganique ou organique alcalin ou formant un alcalin qui est capable d'interagir avec le composant comprenant une source d'ammonium sous forme particulaire, en particulier dans laquelle le composé alcalin ou formant un alcalin est sélectionné dans le groupe constitué par oxyde de calcium, carbonate de calcium, oxyde de zinc et oxyde de magnésium, et des mélanges correspondants ;
- 0,0001 - 5,0 % en poids d'une source de cations, différente du composé inorganique ou organique alcalin ou formant un alcalin, comprenant un cation sélectionné dans le groupe constitué par Fe²⁺, Fe³⁺, Mn²⁺ et Ni²⁺.
- 0 à 1,0 % en poids d'un agent antiagglomérant et/ou rebutant l'humidité et/ou anti-poussière; totalisant jusqu'à 100 % en poids.

12. Composition de mélange à base d'urée selon l'une quelconque des revendications 1 à 11, dans laquelle le composé à base d'urée est sélectionné dans le groupe constitué par urée, sulfate de calcium d'urée (UCaS), nitrate de calcium d'urée (UCaN), nitrate de magnésium d'urée (UMgN), phosphate de calcium d'urée (UCaP), phosphate de magnésium d'urée (UMgP), superphosphate d'urée (USP), nitrate d'ammonium et de calcium d'urée (UCAN), sulfate d'ammonium d'urée (UAS), phosphate d'ammonium d'urée (UAP), sels de potassium d'urée (UK) ou des mélanges correspondants.

13. Composition de mélange à base d'urée selon l'une quelconque des revendications 1 à 12, dans laquelle le composant comprenant une source d'ammonium sous forme particulaire est sélectionné dans le groupe constitué par nitrate d'ammonium, nitrate d'ammonium calcium, nitrate de sulfate d'ammonium, nitrate d'ammonium potassium, phosphate d'ammonium, tels que le phosphate de mono-ammonium (MAP) et le phosphate de diammonium (DAP), le sulfate d'ammonium (AS), le sulfate d'ammonium d'urée, le nitrate d'ammonium de calcium d'urée ou des mélanges correspondants.

14. Procédé pour la fabrication d'une composition de mélange à base d'urée, particulaire, solide selon l'une quelconque des revendications 1 à 13, le procédé comprenant les étapes de :
1) fourniture d'un matériau particulaire à base d'urée qui est traité par 0,0001 à 1,0 % en poids d'un inhibiteur d'uréase sous forme particulaire solide ou sous forme liquide, en particulier dans lequel l'inhibiteur d'uréase est le triamide N-(n-butyl)thiophosphorique (nBTPT)
2) fourniture d'un matériau particulaire, comprenant un composant comprenant une source d'ammonium ;
3) fourniture de 0,0001 à 1,0 % en poids d'un composé inorganique ou organique alcalin ou formant un alcalin capable d'interagir avec le composant comprenant une source d'ammonium sous forme particulaire ;
2) fourniture de 0,0001 à 5,0 % en poids d'une source de cations comprenant un cation choisi dans le groupe constitué par Fe²⁺, Fe³⁺, Mn²⁺ et Ni²⁺ ;
5) mélange des composants fournis dans les étapes 1), 2), 3) et 4) ;
6) éventuellement, application d'un agent sur les composés particulaires, dans lequel l'agent est capable d'augmenter au moins les propriétés antiagglomérantes et/ou rebutant l'humidité et/ou anti-poussière de ladite composition de mélange à base d'urée,
le procédé étant en outre **caractérisé en ce que** ladite source de cations est différente du composé inorganique ou organique alcalin ou formant un alcalin.
